# EUROPÄISCHE PATENTSCHRIFT

(11) **EP 0 786 605 B1**
(45) Veröffentlichungstag und Bekanntmachung des Hinweises auf die Patenterteilung: **02.01.2002**
(21) Anmeldenummer: 97100666.3
(22) Anmeldetag: 17.01.1997
(51) Int. Cl.: F16C 23/08

(54) **Rollenlager**
Roller bearing
Palier à rouleaux

(30) Priorität: 24.01.1996 DE 19602372
(43) Veröffentlichungstag der Anmeldung: 30.07.1997
(73) Patentinhaber: FAG Industrial Bearings AG, 97421 Schweinfurt (DE)
(72) Erfinder: Weigand, Michael, Dr., 97725 Elfershausen (DE); Ganss, Werner, 97424 Schweinfurt (DE); Grehn, Martin, 97456 Dittelbrunn (DE)

(56) Entgegenhaltungen:
- DE-A- 2 836 399
- DE-A- 3 341 866
- DE-C- 594 993
- DE-C- 936 306
- FR-A- 756 710
- US-A- 3 912 346

## Beschreibung

Die Erfindung betrifft ein zweireihiges Pendelrollenlager nach dem Oberbegriff des Anspruchs.

Ein derartiges Lager ist aus der Fig.5 der FR-A-756 710 bekannt. Aus dieser Druchschrift sind verschiedene Führungsringe bzw. Führungselemente bekannt. Alle gezeigten Führungsringe bzw. Führungselemente haben den Nachteil, daß sie beim Ablauf der Montage des Wälzlagers zwischen die beiden Rollenreihen gelegt werden müssen, bevor die Rollen in den Käfig gefügt werden können. Dies hat den Nachteil, daß so ein automatisches Fügen der Rollen in den Käfig nicht durchgeführt werden kann, da die eingelegten Führungsringe den Montagevorgang behindern.

Zweireihige Pendelrollenlager sind auch z. B. aus der DE-PS 594 993 bekannt. Um den Führungsring in die sphärische Außenringlaufbahn einbringen zu können, ist er an zwei gegenüberliegenden Stellen abgeflacht. Diese Abflachungen bedeuten zum einen einen erhöhten Herstellungsaufwand und zum anderen beschränken sie - insbesondere bei breiten Lagerringen - die Konstruktion, da an den Schlüsselflächen ein Mindestquerschnitt gegeben sein muß. Außerdem behindert der bereits in den Außenring eingelegte Führungsring den Zusammenbau des Lagers, insbesondere bei automatischen Montageeinrichtungen. Dies gilt auch für ein Pendelrollenlager wie es in dem DE 87 02 071 U1 dargestellt ist.

Aus der EP 0 051 083 B1 ist ein Metallfensterkäfig für bordlose Pendelrollenlager bekannt, der an seinem Außendurchmesser mit Eindellungen versehen ist, um ihn in das Lager einbringen zu können. Auch diese Maßnahme verteuert den Käfig. Außerdem tritt bei dieser Lösung der Nachteil auf, daß die volle Differenzgeschwindigkeit zwischen Käfig und Außenring zu Verschleiß am Käfig führt.

Aus der US-PS 1,906,259 ist weiterhin ein zweireihiges Pendelrollenlager bekannt, bei dem im Außenring eine Nut angeordnet ist, in die ein geschlitzter Sicherungsring eingelegt ist, der das Ausschwenken des Lagers begrenzen soll. Eine Führungsfunktion für Käfig oder Rollen ist dabei nicht gegeben.

Schließlich ist aus der DE 33 41 866 C2 noch ein Pendelrollenlager mit einem aus Außenteil und Innenteil bestehenden Führungsring bekannt, bei dem der Außenteil des Führungsrings aus mehreren Segmenten besteht, die einzeln auf der Mantelseite des Innenteils befestigt sind, was aufwendig und teuer ist. Dies gilt auch für die dort vorgeschlagene Ausführung, den Außenteil des Führungsringes aus Segmenten zu bilden, die durch Nieten miteinander verbunden sind.

Es ist deshalb **Aufgabe der Erfindung** ein Wälzlager nach dem Oberbegriff des Anspruchs so weiterzuentwickeln, daß die vorgenannten Nachteile vermieden werden und bei kostengünstiger Herstellung des Führungsringes eine einfache Montage auch am komplett vormontierten Lager, also bei schon eingebrachten Käfigen und Rollen, ermöglicht wird, wobei die Käfigkonstruktion insbesondere bei breiten Lagern nicht durch Mindestquerschnitte behindert und eine gute Kinematik des Lagers gewährleistet sein soll.

Die Lösung dieser Aufgabe gelingt mit den im kennzeichnenden Teil des Anspruchs angegebenen Merkmalen.

Durch die Ausbildung des Führungsringes aus zwei abgeflachten Ringsegmenten ergibt sich eine kostengünstige und montagefreundliche Konstruktion, die eine zuverlässige Führung der Wälzkörper und /oder des Käfigs bewirkt und ein Herausfallen der Lagerteile (Käfig, Rollen) bei ausgeschwenktem Innenring verhindert. Die Gefahr des Klemmens des Führungsrings im Außenring wird durch die zwei Hälften vermieden und ein gutes Vermitteln der Gleitgeschwindigkeiten erreicht. Die Führungsringhälften können aus Stahl, Nichteisenmetallen oder Kunststoff gefertigt sein und bei Radialpendelrollenlagern oder bei Pendelkugellagern verwendet werden. Es hat sich gezeigt, daß die in die Kugelfläche der Außenringlaufbahn eingefederten Führungsringhälften auch ohne daß sie miteinander verbunden sind eine zuverlässige formschlüssige Baueinheit des Lagers ergeben.

Die Erfindung soll an einem Ausführungsbeispiel erläutert werden.

Fig. 1 zeigt einen Querschnitt durch ein zweireihiges Radialpendelrollenlager mit Käfig, Rollen und Führungsring

Fig. 2 zeigt das Einbringen der Führungsringhälften in einen Pendelrollenlageraußenring ohne montierte Käfige und Rollen.

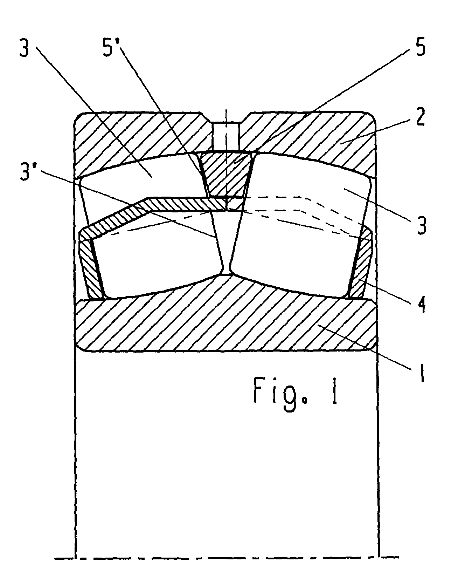

In Fig. 1 ist der Innenring mit 1 und der Außenring mit 2 bezeichnet. Dazwischen befinden sich die Rollen 3, die von einem Käfig 4 auf Abstand gehalten werden. Der Käfig kann natürlich auch zweiteilig ausgebildet sein, das heißt für jede Rollenreihe ist ein separates Käfigteil vorgesehen. Zwischen beiden Rollenreihen ist ein Führungsring 5 angeordnet, der sich an der Außenringlaufbahn abstützt. Erfindungsgemäß ist der Führungsring 5 in zwei Hälften geteilt. Er zentriert nicht nur den Käfig 4 und sorgt so für ein gutes Laufverhalten, sondern kann auch als Anlauffläche für die Rollen 3 dienen. In diesem Fall ist darauf zu achten, daß die Stirnflächen 3' der Rollen 3 und die Anlauffläche 5' der Führungsringe 5 etwa parallel verlaufen.

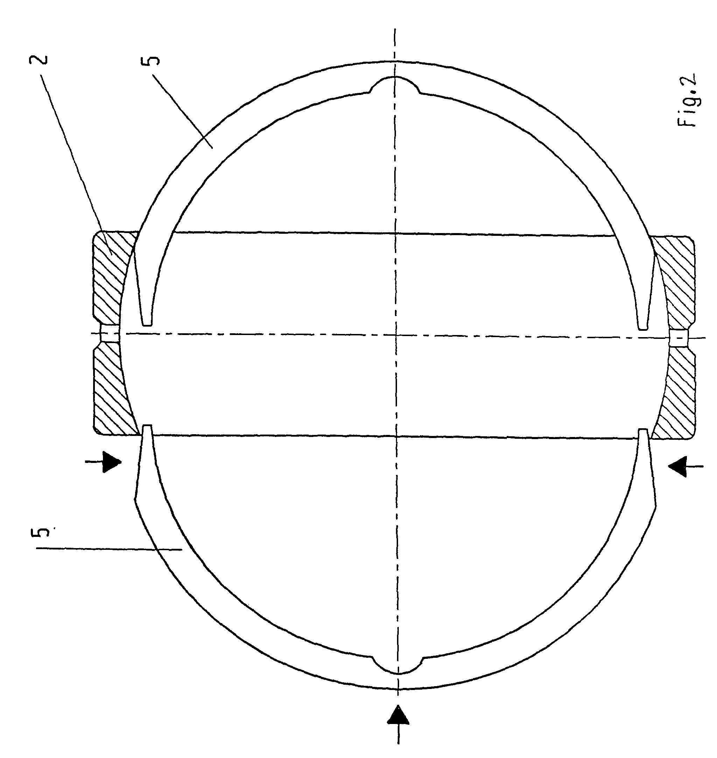

Um die Führungsringe 5 in den sphärischen Außenring 2 einbringen zu können, werden sie, wie in Fig. 2 gezeigt, radial leicht eingefedert, was auf Grund ihrer Geometrie leicht möglich ist. Danach sind sie in der Außenringlaufbahn form-schlüssig gehalten. Um das Einbringen zu erleichtern, sind die Enden abgeflacht und/oder Biegestellen in Form von Querschnittsreduzierungen vorgesehen.

## Patentansprüche

1. Zweireihiges Pendelrollenlager, mit sphärischer Laufbahn und mindestens einem an der Außenringlaufbahn geführten, Führungsring zur Führung der Wälzkörper und/oder des Käfigs, wobei der Führungsring aus zwei getrennten Ringsegmenten (5) besteht, welche formschlüssig in der Kugelfläche des Außenringes (2) gehalten werden und lose zwischen den Wälzkörperreihen angeordnet sind, wobei der Außenring (2) bei der Montage gegenüber dem Innenring (1) ausgeschwenkt ist, **dadurch gekennzeichnet, daß** die Ringsegmente (5) an ihren Enden Abflachungen aufweisen, deren Geometrie am komplett vormontierten Lager, bestehend aus Innenring (1), Käfigen (4) und Rollen (3) sowie gegenüber der Innenring (1) ausgeschwenktem Außenring (2) bei der axial zum Außenring (2) und somit parallel zum Innenring (1) durchgeführten Montage nach elasticher Verformung das Einschrappen der Ringsegmente (5) in der Außenring (2) gewahrleistet.

## Claims

1. A double row self-aligning roller bearing, with a spherical track and at least one guide ring guided on the outer ring track to guide the roller bodies and/or the cage whereby the guide ring comprises two separate ring segments (5), which are held with a positive engagement in the spherical surface of the outer ring (2) and are arranged loosely between the rows of roller bodies, whereby the outer ring (2) is pivoted out in the assembly with respect to the inner ring (1), **characterised in that** the ring segments (5) have flattenings at their ends, whose geometry in the complete pre-assembled bearing comprising the inner ring (1), cages (4) and rollers (3), as well as the outer ring (2) pivoted out with respect to the inner ring (1) axially to the outer ring (2), being therefore parallel to the inner ring (1), permits, following elastic deformation, the snapping in of the ring segments (5) into the outer ring (2) during the assembly.

## Revendications

1. Roulement à tonneaux à deux rangées présentant un chemin de roulement sphérique et au moins un anneau de guidage destiné au guidage des tonneaux et/ou de la cage et guidé sur le chemin de roulement de la bague extérieure, l'anneau de guidage comprenant des segments d'anneau séparés (5) qui sont maintenus par conjugaison de formes dans la surface sphérique de la bague extérieure (2) et maintenus flottants entre les rangées de tonneaux, tandis que lors du montage, la bague extérieure (2) est déportée vers l'extérieur par rapport à la bague intérieure (1), **caractérisé en ce que** les segments d'anneau (5) présentent à leurs extrémités des biseaux dont la géométrie garantit, lors du montage exécuté axialement par rapport à la bague extérieure (2) et donc parallèlement à la bague intérieure (1) et après déformation élastique, l'encliquetage des segments d'anneau (5) dans la bague extérieure (2) sur le roulement complètement prémonté composé de la bague intérieure (1), de la cage (4) et des tonneaux (3), ainsi qu'avec la bague extérieure (2) déportée par rapport à la bague intérieure (1).
